# EUROPÄISCHE PATENTSCHRIFT

(11) **EP 0 599 033 B1**
(45) Veröffentlichungstag und Bekanntmachung des Hinweises auf die Patenterteilung: **27.03.1996**
(21) Anmeldenummer: 93116119.4
(22) Anmeldetag: 06.10.1993
(51) Int. Cl.: F16D 66/02

(54) **Bremsbelag mit Verschleisswarnvorrichtung**
Brake - lining with wear-indicating device
Dispositif indicateur d'usure pour garniture de friction de frein

(30) Priorität: 21.11.1992 DE 4239179
(43) Veröffentlichungstag der Anmeldung: 01.06.1994
(73) Patentinhaber: ITT Automotive Europe GmbH, D-60488 Frankfurt am Main (DE)
(72) Erfinder: Fuchs, Elmar, D-64293 Darmstadt (DE)

(56) Entgegenhaltungen:
- EP-A- 0 032 071
- EP-A- 0 054 480
- EP-A- 0 320 167
- EP-A- 0 459 843
- EP-A- 0 464 347
- EP-A- 0 546 807
- DE-A- 3 820 977
- DE-B- 2 827 035
- GB-A- 2 058 968
- US-A- 3 976 167
- US-A- 4 391 350

## Beschreibung

Die Erfindung betrifft einen Bremsbelag mit Verschleißwarn-Vorrichtung gemäß dem Oberbegriff des Patentanspruchs 1.

Ein gattungsgemäßer Bremsbelag ist aus der DE 38 20 977 A1 bekannt. Bei diesem bekannten Bremsbelag ist ein elektrischer Verschleißsensor von der Schmalseite her in ein Loch eines Reibbelags eingesteckt und an der den Reibbelag tragenden Rückenplatte des Bremsbelags befestigt. Der Verschleißsensor besteht aus einem doppelten Warnleiter, dessen Ende zur Bildung eines Sensorabschnitts als Schlaufe um ein Halteelement geschlungen ist. Weiterhin hat das Halteelement einen Befestigungsabschnitt, der in einer reibbelagfreien Ausnehmung der Rückenplatte eingerastet ist. Der reibbelagfreie Bereich ist also als Einbauraum für den relativ großen Befestigungsabschnitt vorgesehen. Durch den reibbelagfreien Bereich wird aber das zum Abrieb zur Verfügung stehende Volumen des Reibbelags verkleinert und damit seine Lebensdauer verringert. Abgesehen davon werden durch das Ausformen des reibbelagfreien Bereichs und der zum Einrasten des Halteelements bestimmten Öffnungen die Fertigungskosten des Bremsbelags erhöht.

Die den Sensor aufnehmende Mulde ist deshalb in der Rückenplatte vorgesehen, um den Warnpunkt, an dem der Sensor anspricht, in Richtung Rückenplatte zu verschieben. Andernfalls würde der Sensor schon ansprechen, wenn der Reibbelag noch eine ausreichende Restbelagstärke aufweist. Bei dem bekannten Bremsbelag wäre es unter dem Gesichtspunkt der Restbelagstärke sogar möglich, den Sensor noch weiter in Richtung Rückenplatte zu verschieben. Jedoch kann die Mulde ein der Rückenplatte aus fertigungstechnischen Gründen nicht beliebig tief gemacht werden.

Aufgabe der Erfindung ist es, einen Bremsbelag mit Verschleißwarnvorrichtung anzugeben, bei dem ein einfach gestalteter Verschleißsensor auf einfache Weise am Bremsbelag befestigt ist und bei dem der Warnpunkt in Richtung auf eine geringere Restbelagstärke verschoben ist.

Die Lösung der Aufgabe ergibt sich aus den kennzeichnenden Merkmalen des Patentanspruchs 1. Die kreisförmigen Querschnitte des Sensorabschnitts und der Ausnehmung ermöglichen die Befestigung des Warnsensors in einer einfach zu fertigenden Bohrung des Reibbelags. Die Zurücknahme des Warnpunkts in Richtung Rückenplatte erfolgt durch die verdrehte Anorndung der Schlaufe in Bezug auf eine radial verlaufende Achse. Um den Warnpunkt jedoch in einer genau definierten Lage festzuhalten, ist wegen des kreisförmigen Querschnitts eine Verdrehsicherung des Halteelements erforderlich. Die erfindungsgemäße Anordnung verzichtet aber auf einen reibbelagfreien Abschnitt der Rückenplatte, der als Anlagefläche für eine Verdrehsicherung dienen könnte. Zwischen den Schmalseiten der Rückenplatte und des Reibbelags verbleibt jedoch immer eine fertigungstechnisch bedingte Stufe, die von der Erfindung als Verdrehsicherung vorteilhaft ausgenutzt wird.

Durch die erfindungsgemäße Verdrehsicherung erhält man also einen genau definierten Warnpunkt am Ende des vertretbaren Belagverschleißes. Neben dem Vorteil der einfachen Fertigung und Befestigung des Verschleißsensors am Bremsbelag wird auch das zum Abrieb zur Verfügung stehende Volumen des Reibbelags nicht verringert.

In einer Ausführungsform gemäß Anspruch 2 wird der Sensorabschnitt in der Ausnehmung auf einfache Weise durch Kleben befestigt. Wenn gemäß Anspruch 3 die Mulde in die Rückenplatte eingeprägt ist, erfordert die Herstellung keinen zusätzlichen Arbeitsgang. In einfacher Weise ist das Halteelement gemäß Anspruch 4 einstückig aus Kunststoff ausgeführt. Dies ermöglicht eine besonders einfache und kostengünstige Fertigung als Spritzgußteil. Eine bevorzugte Ausgestaltung des Halteelements ergibt sich aus den Merkmalen des Anspruchs 5.

Ein Ausführungsbeispiel der Erfindung wird nachfolgend anhand der Zeichnungen näher erläutert.

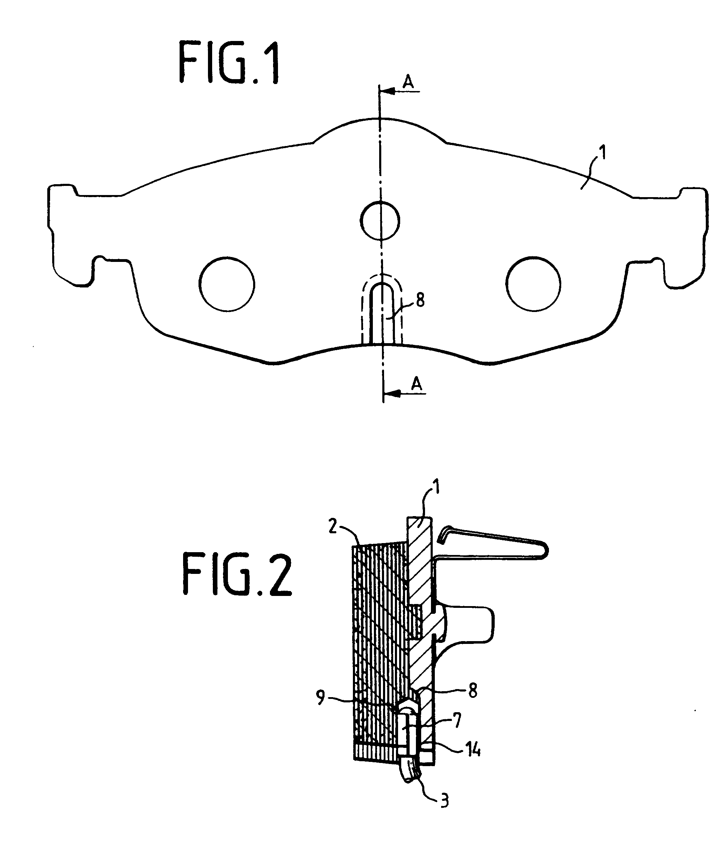

Es zeigen
- Figur 1: eine Draufsicht auf eine Rückenplatte ohne Reibbelag,
- Figur 2: einen Schnitt entsprechend der Linie A - A von Figur 1 durch einen fertigmontierten Bremsbelag mit Reibbelag und Verschleißsensor,

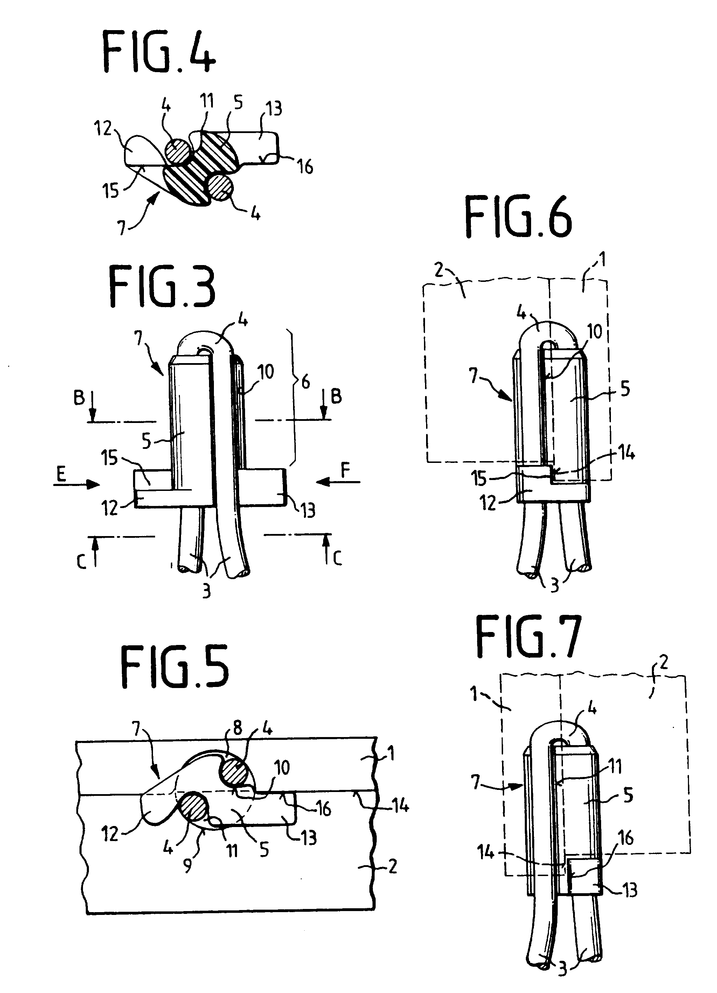

- Figur 3: eine Draufsicht auf den Verschleißsensor in vergrößerter Darstellung,
- Figur 4: einen Schnitt gemäß Linie B - B von Figur 3,
- Figur 5: einen schematisch dargestellten Ausschnitt des Bremsbelags mit Verschleißsensor in einem Schnitt gemäß Linie C - C von Figur 3,
- Figur 6: eine Ansicht des Verschleißsensors aus Richtung E von Figur 3, wobei ein Ausschnitt des Bremsbelags durch Strichelung angedeutet ist,
- Figur 7: eine Ansicht entsprechend Figur 6, jedoch aus Richtung F von Figur 3.

Der dargestellte Bremsbelag für Scheibenbremsen besteht im wesentlichen aus einer Rückenplatte 1, auf deren Vorderseite ein Reibbelag 2 befestigt ist. Ein doppelter Warnleiter 3 ist mit seinem Ende als Schlaufe 4 um ein Halteelement 5 geschlungen und bildet einen im Querschnitt kreisförmigen Sensorabschnitt 6 eines Verschleißsensors 7. Die Rückenplatte 1 ist mit einer eingeprägten Mulde 8 versehen, in deren Bereich der Reibbelag 2 eine als Bohrung 9 ausgeführte Ausnehmung aufweist, die von einer Schmalseite des Reibbelags 2 nach innen eingebracht ist. Der Verschleißsensor 7 ist mit seinem Sensorabschnitt 6 in die Bohrung 9 hineingesteckt und dort durch Kleben befestigt.

Das Halteelelment 5 ist einstückig aus Kunststoff hergestellt und besitzt einen im wesentlichen zylindrischen Grundkörper, der mit zwei gegenüberliegend angeordneten Längsnuten 10, 11 versehen ist, in die die Schlaufe 4 eingelegt wird. Der zylindrische Grundkörper bildet zusammen mit der Schlaufe 4 den Sensorabschnitt 6. Weiterhin besitzt das Halteelement zwei seitlich in entgegengesetzte Richtungen abstehende Konsolen 12, 13, die jeweils zur Anlage an eine Stufe 14 zwischen der Rückenplatte 1 und dem Reibbelag 2 bestimmt sind. Die Konsole 12 ist für diesen Zweck mit einem gestuften Abschnitt 15 versehen. Durch formschlüssige Anlage des gestuften Abschnitts 15 und einer Anlagefläche 16 der Konsole 13 an der Stufe 14 erhält man eine Verdrehsicherung des Halteelements 5.

Bei der Fertigung des Bremsbelags kann nun der Verschleißsensor 7 mit seinem Sensorabschnitt 6 in die Bohrung 9 eingesteckt und verklebt werden, ohne daß sich der Verschleißsensor 7 vor dem Aushärten des Klebstoffs verdrehen kann. Dabei wird die exakte Position der Schlaufe 4 in Bezug auf die Rückenplatte 1 fixiert. Die Schlaufenebene steht dabei etwa im Winkel von 45 ° schräg in Bezug auf die Rückenplattenebene. Selbstverständlich kann je nach den Erfordernissen an den Warnpunkt auch ein anderer Winkel als 45 ° vorgesehen werden.

## Patentansprüche

1. Bremsbelag für Scheibenbremsen mit einer einen Reibbelag (2) tragenden Rückenplatte (1) und einem Verschleißsensor (7), der einen doppelten Warnleiter (3) aufweist, dessen Ende zur Bildung eines Sensorabschnitts (6) als Schlaufe (4) um ein Halteelement (5) geschlungen ist, wobei der Sensorabschnitt (6) im Bereich einer Mulde (8) der Rückenplatte (1) in eine von einer Schmalseite des Reibbelags (2) nach innen sich erstreckende Ausnehmung (9) eingesteckt ist, **dadurch gekennzeichnet,** daß die Ausnehmung (9), die Mulde (8) und der Sensorabschnitt (6) im Querschnitt kreisförmig sind, daß die Schlaufe (4) in einer Ebene liegt, die gegenüber der Ebene der Rückenplatte (1) um eine Achse verdreht ist, die in radialer Richtung verläuft, und daß die Schlaufe (4) gegen Verdrehen gesichert ist, indem das Halteelement (5) einen gestuften Abschnitt (15) aufweist, der an einer zwischen dem Rand der Rückenplatte (1) und dem angrenzenden Rand des Reibbelags (2) gebildeten Stufe (14) anliegt.

2. Bremsbelag nach Anspruch 1, dadurch **gekennzeichnet,** daß der Sensorabschnitt (6) in der Ausnehmung (9) durch Kleben befestigt ist.

3. Bremsbelag nach Anspruch 1 oder 2, dadurch **gekennzeichnet,** daß die Mulde (8) in die Rückenplatte (1) eingeprägt ist.

4. Bremsbelag nach einem der vorhergehenden Ansprüche, dadurch **gekennzeichnet,** daß das Haltelement (5) aus Kunststoff besteht und einstückig ausgeführt ist.

5. Bremsbelag nach einem der vorhergehenden Ansprüche, dadurch **gekennzeichnet,** daß das Haltelement (5) aus einem im wesentlichen zylindrischen Grundkörper besteht, der mit zwei gegenüberliegenden Längsnuten (10, 11) zur Aufnahme der Schlaufe (4) und mit zwei seitlich in entgegengesetzte Richtungen abstehenden, den gestuften Abschnitt (15) aufweisenden Konsolen (12, 13) versehen ist.

## Claims

1. Brake pad for disc brakes including a backplate (1) carrying a friction lining (2), and a wear sensor (7) having a double alarm conductor (3), the end of which is wound as a loop (4) around a retaining element (5) for forming a sensor portion (6), the sensor portion (6), in the area of an indentation (8) in the backplate (1), being inserted into a recess (9) which extends from a narrow side of the friction lining (2) inwardly,
**characterized** in that the recess (9), the indentation (8) and the sensor portion (6) have a circular cross-section, in that the loop (4) is arranged in a plane which, with respect to the plane of the backplate (1), is turned about an axis extending in a radial direction, and in that the loop (4) is prevented from twisting by the retaining element (5) having a stepped portion (15) which abuts on a step (14) formed between the edge of the backplate (1) and the adjacent edge of the friction lining (2).

2. Brake pad as claimed in claim 1,
**characterized** in that the sensor portion.(6) is attached in the recess (9) by cementing.

3. Brake pad as claimed in claim 1 or 2,
**characterized** in that the indentation (8) is embossed into the backplate (1).

4. Brake pad as claimed in any one of the preceding claims,
**characterized** in that the retaining element (5) is integrally made of plastics.

5. Brake pad as claimed in any one of the preceding claims,
**characterized** in that the retaining element (5) includes a substantially cylindrical base member having two oppositely disposed longitudinal grooves (10, 11) for accommodating the loop (4), and two supports (12, 13) which project laterally in opposite directions and include the stepped portion (15).

## Revendications

1. Garniture de frein pour des freins à disques, avec une plaque dorsale (1) portant une garniture de friction (2) et avec un détecteur d'usure (7), qui présente un fil conducteur d'avertissement double (3) dont l'extrémité est enroulée en boucle (4) autour d'un élément de maintien (5) afin de former une partie détectrice (6), la partie détectrice (6) étant emboîtée, dans la région d'un renfoncement (8) de la plaque dorsale (1), dans un évidement (9) s'étendant vers l'intérieur à partir d'un côté étroit de la garniture de friction (2), **caractérisée** en ce que l'évidement (9), le renfoncement (8) et la partie détectrice (6) sont de section circulaire, en ce que la boucle (4) se trouve dans un plan qui est tourné, par rapport au plan de la plaque dorsale (1), autour d'un axe s'étendant en direction radiale, et en ce que la boucle (4) est bloquée en rotation par le fait que l'élément de maintien (5) présente une partie étagée (15) qui s'applique contre un gradin (14) formé entre le bord de la plaque dorsale (1) et le bord attenant de la garniture de friction (2).

2. Garniture de frein selon la revendication 1, **caractérisée** en ce que la partie détectrice (6) est fixée dans l'évidement (9) par collage.

3. Garniture de frein selon la revendication 1 ou 2, **caractérisée** en ce que le renfoncement (8) est réalisé par matriçage dans la plaque dorsale (1).

4. Garniture de frein selon l'une quelconque des revendications précédentes, **caractérisée** en ce que l'élément de maintien (5) est réalisé d'une seule pièce en matière plastique.

5. Garniture de frein selon l'une quelconque des revendications précédentes, **caractérisée** en ce que l'élément de maintien (5) consiste en un corps de base essentiellement cylindrique, qui est pourvu de deux rainures longitudinales opposées (10, 11) pour recevoir la boucle (4) et de deux consoles (12, 13) faisant latéralement saillie dans des directions opposées et présentant la partie étagée (15).
